# EUROPÄISCHE PATENTANMELDUNG

(11) **EP 3 335 807 A1**
(43) Veröffentlichungstag der Anmeldung: **20.06.2018**
(21) Anmeldenummer: 17207237.3
(22) Anmeldetag: 14.12.2017
(51) Int. Cl.: B06B 3/00, B23K 20/10

(54) **SONOTRODE SOWIE SCHWINGEINHEIT MIT EINER SOLCHEN SONOTRODE**

(30) Priorität: 16.12.2016 DE 102016124597
(71) Anmelder: SONOTRONIC Nagel GmbH, 76307 Karlsbad-Ittersbach (DE)
(72) Erfinder:
(74) Vertreter: Weickmann & Weickmann PartmbB

(57) **Zusammenfassung**

Eine mittels Ultraschall-Schwingungen beaufschlagbare Sonotrode (1), wie sie beispielsweise zum Verschweißen von Ultraschall-siegelfähigen Materialien verwendet wird, sowie eine damit ausgestattete Schwing-Einheit (50), die zumindest in einem vorgegebenen Bereich ihrer Außenfläche (1a) eine so gleichmäßige Schwingung im Betrieb der Sonotrode (1) besitzt, dass damit in diesem gesamten Bereich ein Erwärmen oder Durchtrennen von Materialien, durchgeführt werden kann, wobei die Sonotrode (1) einen Hohlraum (16) mit einer Mündung (16a) in der Außenfläche (1a) der Sonotrode (1) aufweist.

## Beschreibung

### I. Anwendungsgebiet

Die Erfindung betrifft eine mittels Ultraschall-Schwingungen beaufschlagbare Sonotrode, sowie eine damit ausgestattete Schwingeinheit, wie sie beispielsweise zum Verschweißen von Ultraschall-siegelfähigen Materialien oder Durchtrennen von solchen Materialien, etwa Spritzgussteilen oder Folien, verwendet wird.

### II. Technischer Hintergrund

Mittels eines Ultraschall-Erzeugers, in aller Regel einem elektronischen Schaltnetzteil, dem sogenannten Ultraschallgenerator, wird eine Ultraschall-Schwingung in Form eines schwingenden, insbesondere sinusförmig schwingenden, elektrischen Signals erzeugt. Dieses elektrische Signal wandelt ein Konverter, der meist ein Piezo-Element enthält, - mit dem der Ultraschallgenerator lediglich über eine Stromleitung und/oder Datenleitung verbunden ist-,in eine mechanische Schwingung um.

Sehr häufig ist an dem Konverter die Sonotrode nicht direkt befestigt, sondern zur Verstärkung der Amplitude dieser mechanischen Schwingung ein Koppelelement, ein sogenannter Booster, zwischen dem Konverter und der Sonotrode befestigt.

Konverter, ggfs. der Booster und die Sonotrode bilden gemeinsam die Schwingeinheit und sind mechanische Bauteile, die in aller Regel aus Metall bestehen, und so aneinander befestigt sind, dass die vom Konverter erzeugte mechanische Schwingung mit möglichst geringen Verlusten an die Sonotrode durchgegeben werden kann, deren schwingende Außenfläche ja das gewünschte Bearbeitungsergebnis bewirken soll.

Die Richtung, in der der Konverter, ggfs. das Koppelelement, also der Booster, und die Sonotrode hintereinander angeordnet sind, wird als axiale Richtung oder Längsrichtung bezeichnet.

Die Schwingungsrichtung der Schwingungen ist dabei ebenfalls meist in Längsrichtung konzipiert und die Schwingung wird deshalb als Longitudinal-Schwingung oder Longitudinal-Welle bezeichnet.

Die Sonotrode besteht in der Regel aus einem massiven Metallteil mit einer im Vergleich zu ihrem größten Querschnitt relativ kleinen Stirnfläche, und die Sonotrode ist dabei in aller Regel so dimensioniert, dass sich beim Beaufschlagen mit einer sinusförmigen Longitudinalwelle der Nulldurchgang der Schwingung vorzugsweise in der Mitte der Sonotroden-Länge befindet. Die Stirnfläche der Sonotrode ist so positioniert, dass dort die maximale mechanische Amplitude der Longitudinal-Schwingung vorliegt. Die zur Schwingungsrichtung in der Regel rechtwinklig angeordnete Stirnfläche der Sonotrode stellt die Wirkfläche der Sonotrode dar.

Diese Stirnfläche wird auf die Oberfläche eines mittels der Ultraschall-Schwingung zu bearbeitenden Produktes, beispielsweise zwei übereinander liegende Kunststoffen, aufgelegt, die sich aufgrund der eingeleiteten mechanischen Ultraschall-Schwingung und des aufgebrachten Druckes erwärmen und miteinander verschweißen.

Die Mantelfläche der Sonotrode ist dabei in der Regel nicht gleichzeitig als schwingende Arbeitsfläche nutzbar.

Es gibt Anwendungsfälle, bei welchen die Bearbeitungsfläche am Produkt keine lotrechte Ebene zur Schwingungsrichtung der Sonotrode darstellt, beispielsweise wenn die Bearbeitungsfläche des Produktes Nicht in einer Sackloch-Geometrie sondern in einer Konus-Geometrie liegt. In einem solchen Fall reduziert sich die Wirkfläche der analog zu gestaltenden Sonotrode quasi auf die Konusspitze, während auf dem restlichen Konus mit einer massiven Sonotrode bisher keine ausreichende, gleichzeitige Ultraschalleinwirkung erzielbar war.

### III. Darstellung der Erfindung

### a) Technische Aufgabe

Es ist daher die Aufgabe gemäß der Erfindung, eine Sonotrode sowie eine damit ausgestattete Schwing-Einheit zur Verfügung zu stellen, deren Sonotrode zumindest in einem vorgegebenen Bereich ihrer Außenfläche, insbesondere einem Mantelstreifen, eine so gleichmäßige Schwingung im Betrieb der Sonotrode besitzt, dass damit im gesamten Bereich des z.B. Mantelstreifens die gewünschte Aufgabe - Erwärmen oder Durchtrennen von Materialien - durchgeführt werden kann.

### b) Lösung der Aufgabe

Diese Aufgabe wird durch die Merkmale der Ansprüche 1, 7 und 11 gelöst.

Vorteilhafte Ausführungsformen ergeben sich aus den Unteransprüchen.

Hinsichtlich der Sonotrode wird diese Aufgabe dadurch gelöst, dass die Sonotrode zumindest teilweise hohl ist, also einen Hohlraum aufweist, der in der Außenfläche der hohlen Sonotrode oder des hohlen Sonotroden-Teiles, etwa der Sonotroden-Spitze, mündet, vorzugsweise in dem Bereich der Außenfläche, die die Befestigungsfläche der hohlen Sonotrode oder des hohlen Sonotroden-Teiles zu dem angrenzenden tragenden Bauteil darstellt.

Wenn sich die Mündung des Hohlraumes im hinteren, also vom freien Ende der Sonotrode abgewandten, Ende befindet, ist das angrenzende tragende Bauteil der Booster oder der Konverter.

Wenn die Sonotrode nur zum Teil hohl ist, dann vorzugsweise in ihrem vorderen Endbereich, der Sonotroden-Spitze, ist dies der an diese hohle Sonotroden-Spitze angrenzende Sonotroden-Teil der sogenannte Sonotroden-Grundkörper, der in aller Regel ein massives Metallteil ist, welches meist stabförmig gestaltet ist.

Dadurch kann in dem gewünschten Bereich der Außenfläche eine für die jeweilige Anwendung ausreichende Schwingung und insbesondere Schwingungsamplitude erreicht werden.

In der Regel ist eine Sonotrode oder der hohle Sonotroden-Teil, insbesondere die hohle Sonotroden-Spitze, an dem sie tragenden Bauteil verschraubt, und dann umgibt das Gewinde, mit dem die Sonotrode am tragenden Bauteil befestigt ist, diese Mündung, wobei das Außengewinde dieser Gewindepaarung vorzugsweise an der Sonotrode oder dem hohlen Sonotroden-Teil, insbesondere der hohle Sonotroden-Spitze, ausgebildet ist. Durch Wahl des Anzugs-Drehmoments kann dabei auch die Vorspannung der beiden Teile gegeneinander festgelegt werden.

Vorzugsweise ist die Sonotrode rotationssymmetrisch um die Längsrichtung ausgebildet und auch die Mündung des Hohlraumes liegt vorzugsweise rotationssymmetrisch um diese Längsrichtung, wobei die Längsrichtung der Sonotrode vorzugsweise übereinstimmt mit der Längsrichtung einer aus Konverter, ggfs. einem Koppelelement und der Sonotrode selbst durch deren Abfolge definierten Längsrichtung.

Vorzugsweise ist die Längsrichtung der Sonotrode auch die Laufrichtung der Schwingung, mit der die Sonotrode im Betrieb beaufschlagt wird.

Vorzugsweise besitzt die Sonotrode oder der hohle Sonotroden-Teil, insbesondere die hohle Sonotroden-Spitze, eine sich zum freien Ende hin verjüngende Querschnittskontur, also Außenfläche, insbesondere eine konische Kontur, wobei sich der Hohlraum in den verjüngenden, insbesondere konischen, Bereich der Kontur hinein erstreckt. Diese Verjüngung kann so gewählt werden, dass diese Kontur genau in eine Vertiefung in der Oberfläche eines Produktes, in der eine Ultraschall-Bearbeitung durchgeführt werden soll, hineinpasst.

Die Außenfläche der Sonotrode ist - ggfs. abgesehen von der Mündung - vorzugsweise eine geschlossene Außenfläche.

Vorzugsweise nimmt die Wandstärke in Längsrichtung, also in axialer Richtung, zum freien Ende der Sonotrode hin zu, wobei das freie Ende vorzugsweise keine ebene Stirnfläche aufweist, sondern eine konvex gekrümmte Stirnfläche ist. Dies erleichtert das Einbringen in eine Vertiefung der Oberfläche des zu bearbeitenden Werkstückes.

Vorzugweise ist auch der Übergang von der Mantelfläche zur Stirnfläche hin gerundet mit einem Radius, der wenigstens dem 0,5-fachen, besser dem einfachen der Wandstärke am Beginn des Überganges von der Mantelfläche her entspricht. Zu geringe Radien, also zu scharfe Kanten, könnten zu einer Beschädigung des Werkstückes führen.

Vorzugsweise besitzt auch die konvex gekrümmte Stirnfläche einen Krümmungsradius, der wenigstens dem 0,5-fachen, besser dem einfachen der Wandstärke, vorzugsweise der geringsten Wandstärke, der hohlen Sonotrode oder des hohlen Sonotroden-Teiles, insbesondere der hohlen Sonotroden-Spitze, entspricht.

Hinsichtlich der Ultraschall-Einheit wird diese Aufgabe dadurch gelöst, dass die hohle Sonotrode oder der hohle Sonotroden-Teil, insbesondere die hohle Sonotroden-Spitze, - vorzugsweise an ihrem hinteren Ende - ein die Mündung des Hohlraumes umgebendes Befestigungselement aufweist, und das das hohle Teil tragende Bauteil - meist der massive Sonotroden-Grundkörper - ein an der der dem hohlen Teil der Sonotrode zugewandten Fläche ausgebildetes Gegenelement aufweist, die zusammenwirken können und mit deren Hilfe dieses am tragenden Bauteil befestigt werden kann.

Insbesondere sind das Befestigungselement und das Gegenelement zwei miteinander kämmende Gewinde, von denen vorzugsweise an der hohlen Sonotrode oder dem hohlen Sonotroden-Teil, insbesondere der hohlen Sonotroden-Spitze, das Außengewinde angeordnet ist.

Falls zwischen dem Konverter und der Sonotrode ein Koppelelement, insbesondere ein meist stabförmiger Booster, vorhanden ist, besitzt dieses Koppelelement vorzugsweise einen massiven Querschnitt, und insbesondere keinen Hohlraum.

Dadurch kann mit entsprechender Masseverteilung und Querschnittsänderung in unterschiedlichen Bereich des Boosters die vom Konverter erzeugte Ultraschall-Schwingung in ihrer Amplitude verstärkt und mit geringen Störungen an die hohle Sonotrode übertragen werden.

Vorzugsweise geht dabei im montierten Zustand die Außenfläche der hohlen Sonotrode ohne Absatz und fluchtend in die angrenzende Außenfläche des Koppelelementes über.

Das gleiche gilt bei einer mehrteiligen Sonotrode für die beiden Teile der Sonotrode.

Dies vermeidet Behinderungen beim Ansetzen der Sonotrode am zu bearbeitenden Produkt, und es kann auch noch der Beginn der Außenfläche des Koppelelementes, angrenzend an die Sonotrode, als Kontaktfläche zum zu bearbeitenden Produkt hin genutzt werden.

Hinsichtlich des Verfahrens zum Betreiben einer solchen Ultraschall-Einheit wird abhängig von der in der Regel vorgegebenen Kontur der Außenfläche der Sonotrode - die vom jeweiligen Bearbeitungsfall abhängt - und abhängig von der Schwingung, mit der die Sonotrode beaufschlagt werden soll, die Wandstärke und insbesondere die Änderung der Wandstärke der Sonotrode um den Hohlraum herum so gewählt, dass wenigstens entlang eines vorgegebenen Bereiches die in diesem nutzbaren Bereich auftretende Schwingung wenigstens so gleichmäßig ist, dass deren Amplitude, insbesondere in radialer Richtung, nirgends um mehr als 50%, besser nicht mehr als 30%, besser nicht mehr als 15% von der höchsten innerhalb dieses Bereiches, insbesondere des Mantelstreifens, vorliegenden Amplitude abweicht.

Dadurch kann der gesamte ausgewählte, also abhängig vom Anwendungsfall vorgegebene, Bereich durchgängig für die Ultraschallbearbeitung am zu bearbeitenden Produkt benutzt werden.

Falls die Art der Schwingung, insbesondere Schwingungsrichtung, Frequenz und Amplitude, der die Sonotrode beaufschlagenden Schwingung noch nicht vorgegeben ist, wird auch diese - in Abstimmung mit dem gewählten Verlauf der Wandstärke der Sonotrode - mit dem gleichen o.g. Ziel gewählt und festgelegt.

Dabei wird die Änderung der Wandstärke, also der Verlauf der Wandstärke in Längsrichtung und/oder in Umfangsrichtung der Sonotrode, entsprechend festgelegt.

In der Regel wird jedoch die die Sonotrode beaufschlagende mechanische Schwingung eine Longitudinal-Welle sein, deren Verlaufsrichtung die Längsrichtung der Schwingeinheit ist, wobei deren Amplitude noch bestimmt werden kann durch Wahl der Gestaltung des Koppelelementes.

Vorzugswese erstreckt sich der vorgegebene, insbesondere nutzbare, Bereich in Umfangsrichtung über den gesamten Umfang der Außenfläche der Sonotrode, sodass also vorzugsweise über den gesamten Außenumfang der Sonotrode an der jeweiligen axialen Position vorzugsweise eine, insbesondere hinsichtlich der Amplitude gleichmäßige, Schwingung nach den oben gegebenen Kriterien vorliegt.

Damit kann an jeder Umfangsstelle einer solchen hohlen Sonotrode die beabsichtigte Siegel- oder Stanzaufgabe durchgeführt werden, was die räumliche Zuordnung des Produktes zur Sonotrode sehr erleichtert.

### c) Ausführungsbeispiele

Eine Ausführungsform gemäß der Erfindung ist im Folgenden beispielhaft näher beschrieben. Es zeigen:
- Figur 1a:: die Schwingeinheit in Seitenansicht,
- Figur 1b:: die Schwingeinheit in Explosionsdarstellung,
- Figur 2a:: die hohle Sonotroden-Spitze im Axialschnitt,
- Figur 2b:: die hohle, rotationssymmetrische Sonotroden-Spitze in der Ansicht vom offenen Ende her.

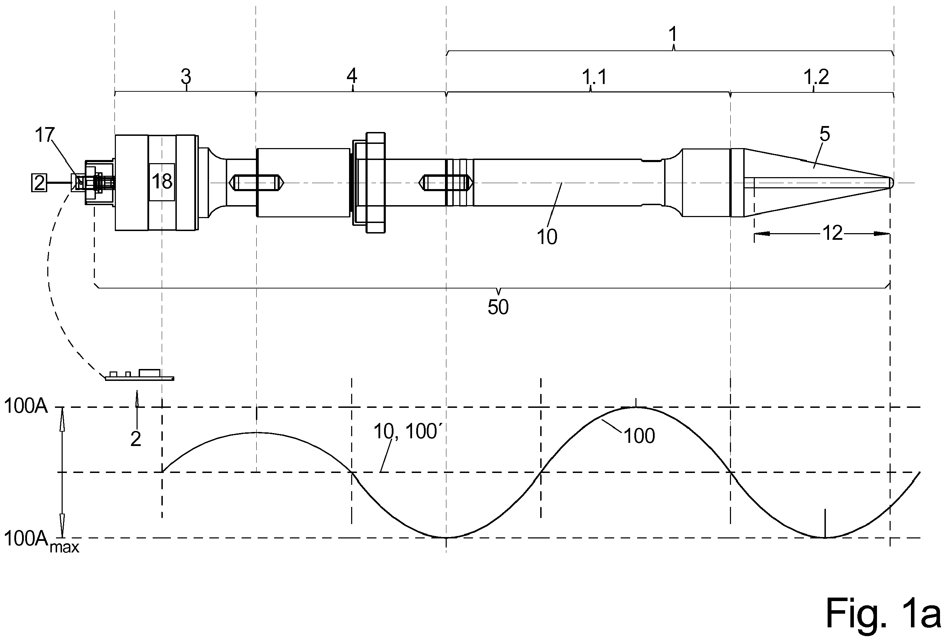

**Figur 1a** zeigt die Schwingeinheit 50, also diejenige Einheit, in der die mechanischen Schwingungen 100 erzeugt und verstärkt und zur Sonotrode 1 weitergeleitet werden:

Die Schwingung 100 wird zunächst in einem Ultraschallgenerator 2, also einer elektrischen Schaltung, als elektrische Schwingung erzeugt, und dieses elektrische Signal über eine Anschlussbuchse 17 einem Piezoelement 18 zugeführt, welches sich in mechanischem Kontakt mit dem Konverter 3 befindet, beispielsweise in dessen Inneren angeordnet ist. Da das Piezo-Element 18 die elektrische Schwingung in eine mechanische Schwingung umwandelt, wird diese mechanische Schwingung auf den Konverter 3 übertragen und dieser schwingt.

In **Figur 1a** in Richtung von links nach rechts ist anschließend, also meist an der von der Anschlussbuchse 17 gegenüberliegenden Seite - an dem Konverter 3 ein Koppelelement 4, meist Booster 4 genannt, fixiert, an den diese mechanische Schwingung 100 übergeben wird, und dessen Aufgabe darin besteht, die Amplitude 100A der Schwingung zu 100 erhöhen, was z.B. durch unterschiedliche Durchmesserverhältnisse der Eingangsseite zur Ausgangsseite des Boosters 4 erzielt werden kann.

Daran auf der Gegenseite anschließend, in **Fig. 1a**, also rechts anschließend, ist die Sonotrode 1 befestigt, an die die Schwingung vom Booster 4 weitergegeben wird.

Im vorliegenden Fall besteht die Sonotrode 1 aus zwei Teilen, nämlich einerseits dem an den Booster 4 anschließenden Sonotroden-Grundkörper 1.1, der in diesem Fall aus massivem Material besteht, und an dessen vom Booster 4 abgewandten freien Ende eine in diesem Fall hohle Sonotroden-Spitze 1.2, die am Sonotroden-Grundkörper 1.1 mechanisch befestigt ist.

Die mechanischen Befestigungen zwischen Konverter 3, Booster 4 und Sonotrode 1 sowie deren Einzelteilen ist so ausgestaltet, dass die mechanische Schwingung 100, die in **Fig. 1a** parallel versetzt separat dargestellt ist, möglichst verlustfrei von einem Bauteil an das nächste übergeben wird.

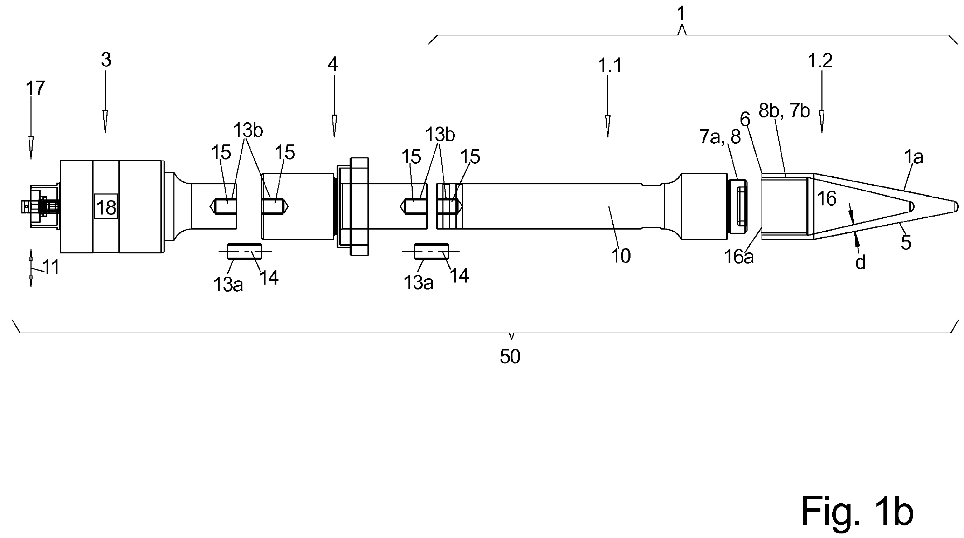

Im vorliegenden Fall sind - wie besser in der Explosionsdarstellung der **Fig. 1b** zu erkennen - diese Teile gegeneinander verschraubt, entweder - wie die beidseitige Verschraubung des Boosters 4 - mittels in den gegeneinander gepressten Stirnflächen der jeweiligen Bauteile zentral vorgesehene Sackloch-Gewindebohrungen 15, die über einen jeweils beidseits in eine der Sackloch-Gewindebohrungen eintauchenden Gewindezapfen 14, beispielsweise einer Madenschraube, gegeneinander verschraubt werden.

Dabei ist wie üblich auf dem Gewindezapfen 14 ein Außengewinde 13a im Wesentlichen über dessen gesamte Länge aufgebracht, welches mit den Innengewinden 13b in den Sackloch-Gewindebohrungen 15 verschraubt werden kann.

Dabei werden die Stirnflächen der Bauteile mit einer vorgegebenen Vorspannung gegeneinander verspannt, um das möglichst verlustfreie Übertragen der Schwingung 100 zu bewirken.

Die genannten Bauteile 3, 4, 1.1 und 1.2 sind im Wesentlichen rotationssymmetrisch um die axiale Richtung 10, die Längsrichtung, ausgebildet, bis auf etwaige vorhandene Abflachungen im Umfang zum formschlüssigen Ansetzen eines Maulschlüssels oder eines anderen Werkzeuges.

Die Bauteile 3, 4, 1.1 und 1.2 sind dabei so dimensioniert und das Piezoelement 18 so am Konverter 3 in Längsrichtung 10 positioniert, dass die in Längsrichtung 10 liegende mechanische Schwingung 100 an Ihrem Entstehungsort, dem Piezoelement 18, vorzugsweise einen Nulldurchgang aufweist, und vorzugsweise auch an der Verbindungsstelle zwischen dem massiven Grundkörper 1.1 der Sonotrode und der hohlen Sonotroden-Spitze 1.2, mit einer maximalen Amplitude im Bereich des Boosters 4 und wenn nötig auch im massiven Grundkörper 1.1 der Sonotrode.

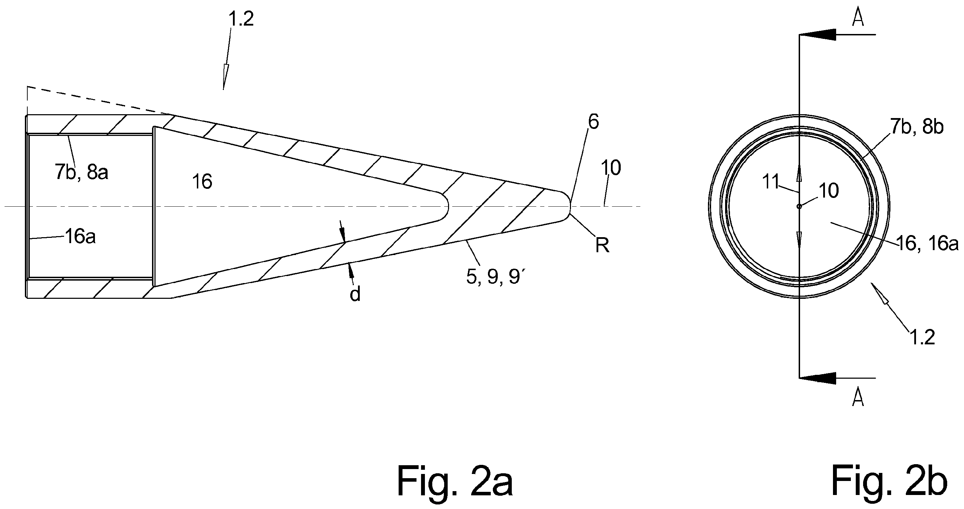

In den **Fig. 2a, 2b** ist die ebenfalls rotationssymmetrisch gestaltete Sonotroden-Spitze 1.2 im Längsschnitt und betrachtet in axialer Richtung vom hinteren, offenen Ende her dargestellt.

Denn die Sonotroden-Spitze 1.2 besitzt am frei auslaufenden Ende eine mit dem Radius R abgerundete Spitze, und ist in diesem Bereich geschlossen, an ihrem hinteren Ende jedoch offen zu dem im Inneren der Sonotroden-Spitze 1.2 hin vorhandenen Hohlraum 16, der in dieser hinteren Stirnfläche 6 mündet.

Die Außenkontur der Sonotroden-Spitze 1.2 ist im vorderen Bereich rotationssymmetrisch konisch und im hinteren Bereich zylindrisch und gleiches gilt für den inneren Hohlraum 16:

Dabei ist die hohle Sonotroden-Spitze 1.2 so gestaltet, dass in einem bestimmten, in Umfangsrichtung umlaufenden, axialen Bereich 12 die hinsichtlich einer definierten Amplitude vorliegende Schwingung auftritt, die in diesem Bereich 12 in eine vorgegebenen Wert einnehmen soll.

Die Sonotroden-Spitze 1.2 ist auf der vorderen Stirnseite des Sonotroden-Grundkörpers 1.1 verschraubt mittels eines konzentrisch zur axialen Richtung 10 umlaufenden Gewindes:

Zu diesem Zweck steht über die vordere Stirnfläche des Sonotroden-Grundkörpers 1.1 ein Gewindezapfen mit einem verringerten Außendurchmesser gegenüber dem anschließenden Rest des Sonotroden-Grundkörpers 1.1 vor, auf dessen Außenumfang als Befestigungselement 7a ein Außengewinde 8b aufgebracht ist, welches verschraubt werden kann gegenüber einem Innengewinde 8a, welches von der hinteren ringförmigen Stirnfläche 6a der Sonotroden-Spitze 1.2 in dessen Innenumfang des hinteren, zylindrischen Teils über eine entsprechende Länge ausgebildet ist und als Gegenelement 7b dient.

Aus **Fig. 2a** ist - im oberen Bereich durch gestrichelte Linien angedeutet - auch ersichtlich, dass die Außenkontur der Sonotroden-Spitze 1.2 keineswegs einen hinteren zylindrischen Außenumfang besitzen muss, sondern es genügt, wenn der Innenumfang beginnend an der freien hinteren Stirnfläche über eine ausreichende Strecke zylindrisch ist, um darin ein zylindrisches Innengewinde 8a unterbringen zu können.

Im Zuge einer nach Möglichkeit etwa gleich großen Wandstärke d der Sonotroden-Spitze 1.2 ist jedoch bei einem zylindrischen Innengewinde 8a vorzugsweise auch der Außenumfang in diesem Bereich zylindrisch, oder der Außenumfang ist auch im hinteren Bereich konisch und dann werden auch die Gewinde 8a, 8b konisch, vorzugsweise mit etwa gleichem Konizitätswinkel wie der Außenumfang, gestaltet werden.

### BEZUGSZEICHENLISTE

- 1: Sonotrode
- 1.1: Sonotroden-Grundkörper
- 1.2: Sonotroden-Spitze
- 1a: Außenfläche
- 2: Ultraschall-Generator
- 3: Konverter
- 4: Koppelelement, Booster
- 5: Mantelfläche
- 6: Stirnfläche
- 7a: Befestigungselemente
- 7b: Gegenelement
- 8a: Innengewinde
- 8b: Außengewinde
- 9:
- 10: Längsrichtung, axiale Richtung
- 11: Querrichtung, radiale Richtung
- 12: (nutzbarer)Bereich
- 13a: Außengewinde
- 13b: Innengewinde
- 14: Gewindezapfen, Madenschraube
- 15: Sackloch-Gewindebohrung
- 16: Hohlraum
- 16a: Mündung
- 17: Anschlussbuchse
- 18: Piezo-Element
- 50: Schwingeinheit

- 100: mechanische Schwingung, Welle
- 100': Schwingungs-Richtung
- 100A: Amplitude
- 100Amax: maximale Amplitude

- d: Wandstärke
- R: Radius

## Patentansprüche

1. **Sonotrode** (1) zum Siegeln oder Stanzen mittels Ultraschall,
**dadurch gekennzeichnet, dass**
wenigstens ein Teil, insbesondere das freie Ende, der Sonotrode (1) einen Hohlraum (16), insbesondere mit einer Mündung (16a) in der Außenfläche (1a) der Sonotrode (1), aufweist.

2. Sonotrode nach Anspruch 1,
**dadurch gekennzeichnet, dass**
- der Hohlraum (16) in einer das freie Ende der Sondertode (1) bildenden Sonotroden-Spitze (1.2) ausgebildet ist mit einer Mündung (16a) in der rückseitigen, vom freien Ende der Sonotroden-Spitze (1.2) abgewandten, Stirnfläche der Sonotroden-Spitze (1.2),
- insbesondere die Sonotroden-Spitze (1.2) mit ihrem rückseitigen Ende mit dem vorderen Ende einer damit fluchtenden Sonotroden-Grundkörper (1.1) befestigt, insbesondere verschraubt, ist und/oder
- die Außenfläche (1a)teilweise die Kontaktfläche der Sonotroden-Spitze (1.2) zu einem diese tragenden Bauteil, insbesondere dem Sonotroden-Grundkörpers (1.1) oder einem Konverter (3) oder einem Koppelelement (4), ist.

3. Sonotrode nach Anspruch einem der vorhergehenden Ansprüche,
**dadurch gekennzeichnet, dass**
- die Außenfläche (1a)der Sonotroden-Spitze (1.2) wenigstens abseits der Mündung (16a) rotationssymmetrisch um eine Längsrichtung (10) ausgebildet ist
und/oder
- die Längsrichtung (10) die Schwingungsrichtung (100') der Schwingung (100) ist, mit der die Sonotrode (1) im Betrieb beaufschlagt wird.

4. Sonotrode nach Anspruch einem der vorhergehenden Ansprüche,
**dadurch gekennzeichnet, dass**
- die Sonotrode (1), insbesondere die Sonotroden-Spitze (1.2), eine sich zum freien Ende hin verjüngende, insbesondere konische, Außen-Kontur aufweist und
- insbesondere der Hohlraum (16) sich in die verjüngende, insbesondere konische, Kontur hinein erstreckt.

5. Sonotrode nach Anspruch einem der vorhergehenden Ansprüche,
**dadurch gekennzeichnet, dass**
die Wandstärke (d) der hohlen Sondertode (1), insbesondere der hohlen Sonotroden-Spitze (1.2), in axialer Richtung (10) sich im hinsichtlich des Außenquerschnittes verjüngenden, insbesondere konischen, Bereich der Sonotrode (1), zum freien Ende hin zunimmt.

6. Sonotrode nach Anspruch einem der vorhergehenden Ansprüche.
**dadurch gekennzeichnet, dass**
bei einer sich zum freien Ende hin verjüngenden Querschnittskontur der Übergang von der Mantelfläche (5) zur Stirnfläche (6) gerundet ist mit einem Radius (R), der wenigstens dem 0,5-fachen, besser dem einfachen der Wandstärke (d) am Beginn des Überganges von der Mantelfläche (5) her entspricht.

7. **Schwingeinheit** (50), mit
• einem Konverter (3),
• einer Sonotrode (1) nach einem der vorhergehenden Ansprüche,
• gegebenenfalls einem Koppelelement (4) dazwischen,
**dadurch gekennzeichnet, dass**
- die Sonotrode (1), insbesondere die hohle Sonotroden-Spitze (1.2), wenigstens ein die Mündung (16a) des Hohlraumes (16) umgebendes Befestigungselement (7a) aufweist und
- das der Sonotrode (1), insbesondere dem Sonotroden-Grundkörper, zugewandte Ende des Konverters (3) oder des Koppelelementes (4) zu dem wenigstens einen Befestigungselement (7a) passendes und mit diesem zusammenwirkendes Gegenelement (7b) aufweist.

8. Schwingeinheit nach Anspruch 7,
**dadurch gekennzeichnet, dass**
- die hohle Sonotroden-Spitze (1.2) an dem vorderen freien Ende einer sich daran in axialer Richtung (10) nach hinten anschließenden Sonotroden-Grundkörper (1.1) befestigt ist,
und/oder
- der Sonotroden-Grundkörper (1.1), insbesondere über die gesamte Länge, einen massiven Querschnitt besitzt und insbesondere stabförmig ausgebildet ist.

9. Schwingeinheit nach Anspruch 8 oder 7,
**dadurch gekennzeichnet, dass**
das Befestigungselement (7a) und das Gegenelement (8a) miteinander kämmende, die Mündung (16a) umgebende, Gewinde (8a, b) sind und insbesondere auf dem Sonotroden-Grundkörper (1.1) das Außengewinde (8a) angeordnet ist.

10. Schwingeinheit nach Anspruch 9, 7 oder 8,
**dadurch gekennzeichnet, dass**
die Außenfläche (1a) der Sonotroden-Spitze (1.2) ohne Absatz und fluchtend in die angrenzende Außenfläche des Sonotroden-Grundkörpers (1.1) übergeht.

11. **Verfahren** zum Betreiben einer Schwingeinheit (50) nach einem der vorhergehenden Ansprüche,
**dadurch gekennzeichnet, dass**
bei einer vorgegebenen Kontur der Außenfläche (1a) der Sonotrode (1) und Beaufschlagung der Sonotrode (1) mit einer Longitudinal-Welle (100), insbesondere nur mit einer Longitudinal-Welle (100), die Wandstärke (d) und insbesondere der Verlauf der Wandstärke (d) der hohlen Sonotrode (1), insbesondere der hohlen Sonotroden-Spitze (1.2), um den Hohlraum (4) herum so gewählt wird, dass
- wenigstens in einem vorgegebenen Bereich (12) ihrer Außenfläche (1a) der der hohlen Sonotrode (1), insbesondere hohlen Sonotroden-Spitze (1.2), die insbesondere rotationssymmetrisch ist,
- die in diesem Bereich (12) der Außenfläche (1a) auftretende Schwingung wenigstens so gleichmäßig ist, dass deren Amplitude (100A), insbesondere in radialer Richtung (11), nirgends um mehr als 50 %, besser nicht mehr als 30 %, besser nicht mehr als 15 %, von der höchsten innerhalb dieses Bereiches (12) vorliegenden Amplitude (100Amax) abweicht.

12. Verfahren nach Anspruch 11,
**dadurch gekennzeichnet, dass**
die Frequenz der insbesondere Longitudinal-Welle (100)
- entweder ebenfalls vorgegeben ist
- oder ebenfalls so gewählt wird, dass zusammen mit der gewählten Wandstärke (d) die an wenigstens in einem vorgegebenen Bereich (12) ihrer Außenfläche (1a) auftretende Schwingung wenigstens so gleichmäßig ist, dass deren Amplitude (100A), insbesondere in radialer Richtung (11), nirgends um mehr als 50 %, besser nicht mehr als 30 %, besser nicht mehr als 15 %, von der höchsten innerhalb dieses Bereiches (12) vorliegenden Amplitude (100A) abweicht.

13. Verfahren nach einem der vorhergehenden Verfahrensansprüche,
**dadurch gekennzeichnet, dass**
- der vorgegebenen Bereich (12) vor der freien Stirnfläche der Sonotrode (1), insbesondere der hohlen Sonotroden-Spitze (1.2), endet
und/oder
- der vorgegebenen Bereich (12) ein Mantelstreifen (9) ist, der entlang einer Mantellinie (9') verläuft und, eine Breite (b) von mindestens 1 mm, besser mindestens 2 mm, besser mindestens 3 mm besitzt und insbesondere sich in Breitenrichtung über den gesamten Umfang der Außenfläche (1a) der Sonotrode (1), insbesondere der hohlen Sonotroden-Spitze (1.2), erstreckt.

14. Verfahren nach einem der vorhergehenden Verfahrensansprüche,
**dadurch gekennzeichnet, dass**
der Verlauf der Wandstärke (d) in Längsrichtung (10) und/oder in Umfangsrichtung der Sonotrode (1), insbesondere der hohlen Sonotroden-Spitze (1.2), entsprechend festgelegt wird.
